# EUROPÄISCHE PATENTSCHRIFT

(11) **EP 1 945 984 B1**
(45) Veröffentlichungstag und Bekanntmachung des Hinweises auf die Patenterteilung: **10.03.2010**
(21) Anmeldenummer: 06806067.2
(22) Anmeldetag: 05.10.2006
(51) Int. Cl.: F16L 17/035

(54) **ROHRLEITUNGSKUPPLUNG MIT EINEM DICHTUNGSRING UND ROHRLEITUNGSSYSTEM FÜR DIE FÖRDERUNG VON DICKSTOFFEN**
PIPELINE COUPLING WITH A SEALING RING, AND PIPELINE SYSTEM FOR THE DELIVERY OF THICK MATTER
ACCOUPLEMENT POUR CONDUITS TUBULAIRES DOTE D'UNE BAGUE D'ETANCHEITE ET SYSTEME DE CONDUITS TUBULAIRES CONÇU POUR LE TRANSPORT DE SUBSTANCES EPAISSES

(30) Priorität: 03.11.2005 DE 102005052517
(43) Veröffentlichungstag der Anmeldung: 23.07.2008
(73) Patentinhaber: Schwing GmbH, 44647 Herne (DE)
(72) Erfinder: KREHL, Dietmar, 44265 Dortmund (DE)
(74) Vertreter: Bockhorni & Kollegen
(86) Internationale Anmeldenummer: PCT/EP2006/009658
(87) Internationale Veröffentlichungsnummer: WO 2007/051515

(56) Entgegenhaltungen:
- US-A- 2 184 376
- US-A- 4 311 248

## Beschreibung

Die vorliegende Erfindung betrifft eine Rohrleitungskupplung zum Verbinden einzelner Rohrleitungsabschnitte zu einem Rohrleitungssystem für die Druckförderung von Dickstoffen gemäß dem Oberbegriff des Anspruches 1 und ein Rohrleitungssystem zur Druckförderung von Dickstoffen gemäß dem Oberbegriff des Anspruches 8 (US 2,184,376 A).

Bei der Förderung von Dickstoffen, beispielsweise Beton, Mörtel und dgl., werden zur Überwindung von Höhendifferenzen so genannte Förderanlagen eingesetzt, bei denen der zu fördernde Dickstoff durch eine Förderleitung bzw. ein Rohrleitungssystem zu der gewünschten Ausbringungsstelle gefördert wird. Der Förderdruck bzw. Fördervolumenstrom wird hierbei durch eine Dickstoffpumpe erzeugt. Derartige Dickstoffpumpen, insbesondere Betonpumpen, weisen üblicherweise zwei im Gegentakt arbeitende Förderzylinder auf, die wechselweise durch den hin- und hergehenden Förderkolben Beton aus einem Vorratsbehälter ansaugen und dann in das Rohrleitungssystem drücken. Dadurch ergibt sich ein Förderstrom mit pulsierenden Förderdrücken. Ein gängiges Bauprinzip solcher Förderanlagen ist die Kombination des Rohrleitungssystems mit einem Knick- und/oder Teleskopmast, der beispielsweise auf einem Lastfahrzeug montiert ist. Selbstverständlich kann eine solche Förderanlage aber auch stationär aufgebaut oder als Manipulatoren hergerichtet sein. Für den Fall, dass eine solche Förderanlage auf einem Lastfahrzeug montiert ist, wird dieses am Einsatzort zunächst gegen Kippen gesichert. Erst danach können die einzelnen Knickmastabschnitte des Knickmastes ausgeklappt bzw. ausgefahren und die Förderanlage in Betrieb genommen werden. Die Stellbewegung der Knickmastabschnitte erfolgt in bekannter Weise bspw. durch hydraulische Zylinder. Die Dickstoffpumpe fördert dann den extern bereit gestellten Dickstoff durch ein Rohrleitungssystem, das entlang der Knickmastabschnitte angeordnet ist, zu der gewünschten Ausbringstelle, an der der Dickstoff bspw. durch einen rüsselartigen Schlauchfortsatz aus dem Rohrleitungssystem austritt. Die überwindbaren Höhendifferenzen sind beträchtlich und können 50 m und mehr betragen, was jedoch einen hohen Förderdruck bedingt. Selbstverständlich können mit solchen Förderanlagen auch horizontale Distanzen überwunden werden, bspw. in unwegsamen oder unzugänglichen Geländen.

Das Rohrleitungssystem zur Förderung der Dickstoffe ist teils außen entlang und teils innerhalb der Knickmastabschnitte geführt. Es setzt sich aus einzelnen Rohrleitungsabschnitten zusammen, die mittels Rohrleitungskupplungen miteinander verbunden bzw. verspannt sind. Die Rohrleitungskupplungen selbst werden mittels Dichtungen gegen unerwünschten Austritt des Dickstoffes abgedichtet. Konstruktiv muss sicher gestellt sein, dass die einzelnen Rohrleitungsabschnitte beim Aus- bzw. Einklappen des Knickmastes relativ zueinander begrenzt bewegbar sind. Daher weist die Befestigung der einzelnen Rohrleitungsabschnitte innerhalb der Rohrleitungskupplungen ein zumindest axiales Spiel auf, bspw. in der Größenordnung von 2-3 mm. Im Bereich der Knickmastgelenke muss zudem eine Verdrehbarkeit benachbarter Rohrleitungsabschnitte ermöglicht sein. Ein nicht unerhebliches Problem ergibt sich auch daraus, dass der Fördervolumenstrom des Dickstoffes infolge von Reibung an den Innenwandungen des Rohrleitungssystems eine auf die einzelnen Rohrleitungsabschnitte axial wirkende Kraft ausübt, sodass benachbarte Rohrleitungsabschnitte an den betreffenden Rohrleitungskupplungen auseinander getrieben werden. An Kickungen und Bögen im Rohrleitungssystem wirken infolge der Umlenkung des Fördervolumenstroms zusätzliche Kräfte auf die betreffenden Rohrleitungsabschnitte ein. Beispielsweise kann an einer Rohrleitungskupplung mit einem Nenndurchmesser von 125 mm bei einem Förderdruck von 50 bar eine resultierende maximale Kraft von 61,36 kN auftreten, welche die miteinander verbundenen Rohrleitungsabschnitte auseinander treibt.

Erschwerend kommt hinzu, dass der Knickmast während des Förderbetriebs bewegt bzw. verfahren wird, wenn die Ausbringungsstelle für den Dickstoff verändert werden soll. Hierbei wirken die aus dem Fördervolumenstrom resultierenden Kräfte und die aus der Stellbewegung der Knickmastabschnitte resultierenden Kräfte mit teilweise unterschiedlichen Wirkungsrichtungen auf das Rohrleitungssystem ein, sodass es im Bereich der Rohrleitungskupplungen zu einer axialen und/oder radialen Verschiebung, zu einer Knickung und/oder zu einer Verdrehung der verbundenen Rohrleitungsabschnitte relativ zueinander kommt. Wie bereits beschrieben weist daher die Befestigung der einzelnen Rohrleitungsabschnitte innerhalb der Rohrleitungskupplungen ein Spiel auf. Dieses Spiel zwischen den einzelnen Rohrleitungsabschnitten ermöglicht in erster Linie eine axiale Verschiebbarkeit der einzelnen Rohrleitungsabschnitte, aber auch eine leichte Knickung, radiale Verschiebung und/oder Verdrehung.

Die Rohrleitungskupplungen sind mittels Dichtungen gegen unerwünschten Austritt des Dickstoffes abzudichten. Hierzu wird meist eine ringförmige sogenannte Flanschdichtung verwendet, in die die beiden stirnseitigen Enden der zu verbindenden Rohrleitungsabschnitte sozusagen von beiden Seiten eingesteckt werden, bevor sie bspw. mittels eines Schalenkupplungsteiles miteinander verspannt werden. Die Abdichtung erfolgt durch Dichtungslippen bzw. -flächen die am Außenumfang des betreffenden Rohrleitungsabschnittes anliegen. Zur Verstärkung der Anpresskraft der Dichtungslippen ist die Flanschdichtung bzw. der Dichtungsring mit einer inneren Druckkammer versehen, wodurch mit steigendem Förderdruck auch die Dichtwirkung verstärkt wird. Es handelt sich hierbei um ein Bauprinzip mit selbstverstärkender Dichtwirkung.

Beim Zusammenbau der einzelnen Rohrleitungsabschnitte, bspw. bei der Erstmontage, werden die Stirnseiten der zu verbindenden Rohrleitungsabschnitte typischerweise bündig, d.h. auf Stoß, zusammengesetzt und mittels einer Rohrleitungskupplung, bspw. mit einer Schalenkupplung, miteinander verbunden bzw. verspannt. Das Spiel zwischen den einzelnen Rohrleitungsabschnitten führt im Förderbetrieb dazu, dass die einzelnen Rohrleitungsabschnitte an den Rohrleitungskupplungen jeweils um den vorgesehenen Spielabstand auseinander gedrückt werden, wobei sich die Gesamtverschiebung kumulativ aufaddiert und 20-30 mm und sogar mehr betragen kann. Dies kann zu erheblichen Problemen an den Lagerstellen des Rohrleitungssystems führen. Zur Vermeidung dieser Probleme wird beim Zusammenbau meist eine Flanschdichtung verwendet, die einen Distanzsteg in Form einer Innenlippe aufweist, wobei der Distanzsteg die zu verbindenden Rohrleitungsabschnitte bereits auf den maximal möglichen Spielabstand einstellt.

Der zwischen den Stirnseiten der einzelnen Rohrleitungsabschnitte eingebrachte Distanzsteg bereitet allerdings Probleme in der Art, dass er unter dem Förderdruck des Fördervolumenstroms radial nach außen gedrückt wird, sich dabei ausbaucht und den Spalt zwischen den Stirnseiten der Rohrleitungsabschnitte dichtend verschließen kann. Hierdurch bleibt die innere Druckkammer des Dichtungsringes druckfrei, sodass die Dichtungslippen ohne die erforderliche Dichtkraftverstärkung am Außenumfang des betreffenden Rohrleitungsabschnittes anliegen. Dadurch ist dann keine kontrollierte Abdichtung mehr gegeben. Durchdringt der geförderte Dickstoff an einer Stelle den Spalt, bspw. in dem der Distanzsteg bereichsweise aus dem Spalt radial nach außen herausgedrückt oder durch die bereits beschriebenen Relativbewegung der einzelnen Rohrleitungsabschnitte beschädigt wird, so ist die Anpresskraft der Dichtungslippen möglicherweise zu gering, so dass es zu einem unerwünschten Austritt des Dickstoffes an der Rohrleitungskupplung kommt.

Der Erfindung liegt die Aufgabe zugrunde, eine Rohrleistungskupplung bzw. ein Rohrleitungssystem bereit zu stellen, dessen Dichtheit im Betriebszustand permanent gewährleistet ist. Die Erfindungslösung soll zudem kostengünstig sein und die Fertigungs- bzw. Montageaufwände nicht unverhältnismäßig erhöhen.

Die Aufgabenstellung wird erfindungsgemäß durch die Merkmale des Kennzeichnungsteils des Anspruches 1 und durch die Merkmale des Kennzeichnungsteils des Anspruches 9 gelöst, wobei zweckmäßige Weiterbildungen durch die Merkmale der jeweiligen Unteransprüche gekennzeichnet sind.

Ein zwischen dem Innenraum des Rohrleitungssystems bzw. der Förderleitung und der Druckkammer im Dichtungsring permanent wirksamer Verbindungskanal stellt sicher, dass in jedem Betriebszustand, d.h. sobald im Inneren des Rohrleitungssystems ein Förderdruck aufgebaut ist, die Druckkammer im Dichtungsring druckbeaufschlagt ist. Dadurch wird in jedem Betriebszustand eine kontrollierte Abdichtung über die zumeist radial wirksamen Dichtflächen der Dichtungsringe gewährleistet, da sich infolge dieser Druckbeaufschlagung die Dichtungslippen bzw. - flächen zuverlässig dichtend an den Außenumfang des zugehörigen Rohrleitungsabschnittes anlegen und zwar auch unter dem Betriebsdruck. Die Dichtheit der Rohrleitungskupplung bzw. des Rohrleitungssystems ist somit für sämtliche Betriebszustände gewährleistet, wobei gleichzeitig das erforderliche Spiel der verspannten Rohrleitungsabschnitte zueinander unbeeinträchtigt bleibt. Auch mehrere parallel wirksame Verbindungskanäle sind möglich.

Ein weiterer Vorteil ist darin zu sehen, dass zu jedem Betriebszeitpunkt eine optimale Schwingungs- und Geräuschdämpfung der miteinander verspannten Rohrleitungsabschnitte erzielt wird.

Durch den Verbindungskanal bzw. die Verbindungskanäle wird ferner ein lokales Herausdrücken des Distanzsteges aus dem Spalt zwischen den Stirnseiten der Rohrleitungsabschnitte wirkungsvoll verhindert, so dass der Distanzsteg seinen Distanzzweck in jedem Betriebszustand beibehält.

In der vorteilhaften und nicht nahe liegenden Ausführungsform ist der Verbindungskanal bzw. sind die Verbindungskanäle im Dichtungsring selbst angeordnet. Es hat sich gezeigt, dass das weichelastische Material des Dichtungsringes für eine permanent wirksame Verbindung zwischen dem Inneren des Rohrleitungssystems und der Druckkammer des Dichtungsringes durchaus geeignet ist. Da die Verbindungskanäle unmittelbar im Herstellungsprozess des Dichtungsringes erstellt werden können, erweist sich diese Ausführungsform als äußerst wirtschaftlich. Die technisch zunächst näher liegende Variante des Einbringens von Verbindungskanälen in die Enden der betreffenden Rohrleitungsabschnitte, bspw. in Form von Nuten, ist demgegenüber mit deutlich höheren Kosten verbunden.

Als besonders vorteilhaft erweist es sich, den Verbindungskanal in Form einer sich radial nach außen erstreckenden Ausnehmung im Distanzsteg des Dichtungsringes anzuordnen, womit eine unmittelbare Verbindung zwischen dem Inneren des Rohrleitungssystems und dem Druckraum des Dichtungsringes ausgebildet ist. Infolge von Verschmutzung oder des bereits beschriebenen Spiels verspannter Rohrleitungsabschnitte zueinander erweist es sich als besonders vorteilhaft, im Distanzsteg des Dichtungsringes mehrere über dem Umfang verteilte Ausnehmungen anzuordnen, beispielsweise fünf Ausnehmungen, die gleichmäßig in einem Umfangswinkel von je 72° zueinander im Distanzsteg eingebracht sind.

Weiterhin hat sich gezeigt, dass eine Halbkreisform für die Ausnehmungen ideal zu sein scheint, wobei die Übergänge in die Ausnehmungen hinein ohne Knick, d. h. tangentenstetig ausgebildet sind. Falls mehrere Ausnehmungen vorgesehen sind, können diese gleiche Formen und Abmessungen aufweisen, hierfür besteht aber keine technische Notwendigkeit.

Die radiale Tiefe der Ausnehmung ist so zu wählen, dass im Förderbetrieb zuverlässig ein Verbindungskanal bzw. mehrere Verbindungskanäle zwischen dem Inneren des Rohrleitungssystems und dem Druckraum des Dichtungsringes vorhanden ist/sind. Um eine hinreichende mechanische Stabilität des Dichtungsringes, insbesondere der verbliebenen Distanzstegabschnitte zu gewährleisten, sollte die radiale Tiefe der Ausnehmung bzw. der Ausnehmungen nicht ganz der Steghöhe entsprechen, so dass am tiefsten Punkt der Ausnehmung noch ein Reststeg vorhanden ist. Als brauchbarer Wert für die radiale Tiefe der Ausnehmungen hat sich eine Größenordnung von 2/3 bis 3/4 der Gesamthöhe des Distanzstegs erwiesen, was einem prozentualen Wert von etwa 60-80 % der Gesamthöhe des Distanzsteges entspricht.

Aus den bereits dargelegten Gründen der Wirtschaftlichkeit erscheint es sinnvoll, den Dichtungsring einteilig herzustellen. Hierdurch werden Herstellungs- und Lagerkosten gering gehalten. Ferner minimiert sich der Montageaufwand.

Der Dichtungsring ist vorteilhaft aus einem weichelastischen Material gebildet, vorzugsweise aus einem kautschukähnlichen Material, beispielsweise aus einem Gummiwerkstoff, einem Elastomerwerkstoff oder einem Siliconwerkstoff.

Zur leichteren Montage ist der Distanzsteg in axialer Richtung des Dichtungsringes mittig angeordnet, wodurch beim Verbauen eine Einbaulage nicht berücksichtigt werden muss.

Der Verbindungskanal bzw. die Verbindungskanäle können auch durch sich radial erstreckende Bohrungen im Distanzsteg ausgebildet sein. Ferner ist es möglich, den Distanzsteg über seinen Umfang mit unterschiedlicher, d.h. variierender Stärke auszubilden, wodurch sich zwangsläufig ebenfalls Verbindungskanäle ergeben.

Ein Ausführungsbeispiel soll nachfolgend anhand der Figuren näher beschrieben und erläutert werden. Darin zeigen:
- Fig. 1: ein Lastfahrzeug mit einem Knickmast zur Förderung von Be- ton;
- Fig. 2: die Verbindung zweier Rohrleitungsabschnitte mittels einer Schalenkupplung wie sie dem Stand der Technik entspricht;
- Fig. 3: die Verbindung zweier Rohrleitungsabschnitte mittels einer Rohrleitungskupplung in einer Schnittdarstellung, die die er- findungsgemäßen Verbindungskanäle aufweist;
- Fig. 4a: einen Dichtungsring mit Ausnehmungen in einem Teilschnitt;
- Fig. 4b: eine einzelne Ausnehmung des Dichtungsringes aus Fig. 4a in einer Detaildarstellung;
- Fig. 5: eine Rohrleitungskupplung mit den erfindungsgemäßen Ver- bindungskanälen in einer perspektivischen Ansicht mit Teil- schnitt;

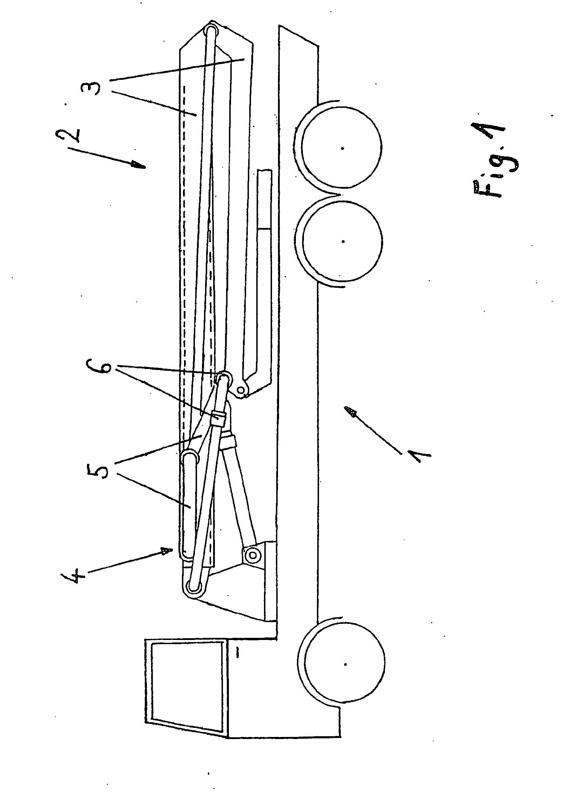

Fig. 1 zeigt einen mit 1 bezeichneten Lastkraftwagen mit einem Knickmast 2 der zur Förderung von Dickstoffen, beispielsweise Beton, Mörtel und dgl., ausklappbar ist, so dass der Dickstoff beispielsweise über Höhendifferenzen hinweg ausgebracht werden kann. Der Knickmast 2 ist aus einzelnen Knickmastabschnitten 3 zusammengesetzt, die teleskopartig und/oder gelenkig miteinander verbunden und durch an den Mastabschnitten angelenkte Hydraulikzylinder ausschwenkbar sind. An den Knickmastabschnitten 3 entlang und/oder teilweise auch innerhalb der Knickmastabschnitte ist eine Förderleitung bzw. ein Rohrleitungssystem 4 angeordnet, das aus einzelnen Rohrleitungsabschnitten 5 zusammengesetzt ist. Ein gebräuchlicher Nenndurchmesser eines solchen Rohrleitungssystems zum Fördern von Dickstoffen ist beispielsweise 125 mm. Die einzelnen Rohrleitungsabschnitte 5 sind üblicherweise mittels rohrschellenartigen Rohrleitungskupplungen 6 miteinander verbunden bzw. verspannt, wobei innerhalb der Rohrleitungskupplungen 6 ein gewisses Spiel vorhanden ist, so dass den miteinander verbundenen Rohrleitungsabschnitte die Möglichkeit für eine begrenzte axiale Verschiebung, radiale Verschiebung, Knickung und/oder Verdrehung relativ zueinander gegeben ist.

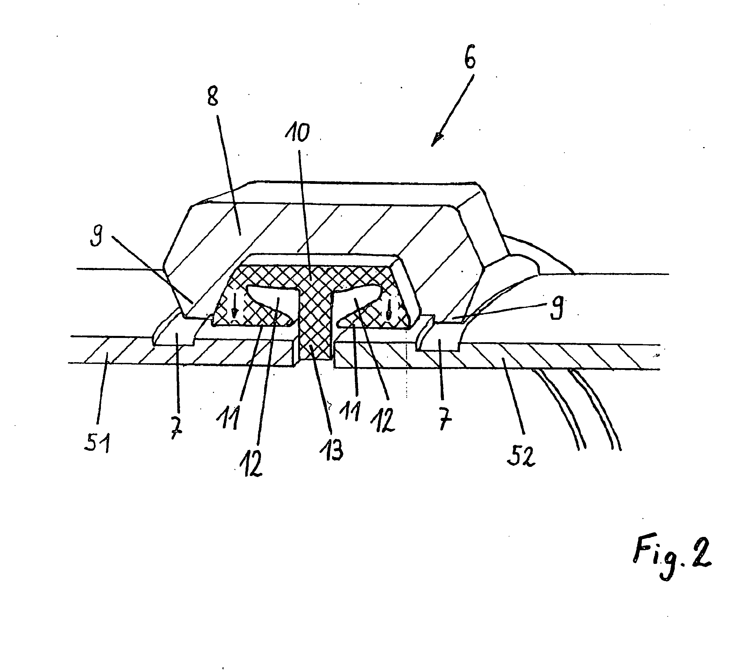

Fig. 2 zeigt eine Rohrleitungskupplung 6 wie sie dem Stand der Technik entspricht. Die stirnseitigen Enden zweier benachbarter Rohrleitungsabschnitte 51 und 52 sind üblicherweise mit einem Kupplungsteil in Art einer Rohrschelle, nämlich mit einer sogenannten Schalenkupplung miteinander verspannt. Im Bereich der stirnseitigen Enden der Rohrleitungsabschnitte 51 und 52 sind am Außenumfang umlaufende Nuten 7 vorgesehen, in die ein rohrschellenartiges Schalenkupplungsteil 8 eingreift und die beiden Rohrleitungsabschnitte 51 und 52 miteinander verspannt. Anstelle solcher Nuten werden die Rohrleitungsabschnitte häufig auch mit radial vorstehenden Stirnflanschen versehen, die Schultern für das Hintergreifen der Schalenkupplungen bilden. Typischerweise ist die Schulter 9 des Schalenkupplungsteiles 8 schmaler ausgebildet als die Nut 7 am Umfang des betreffenden Rohrleitungsabschnittes 51 oder 52, so dass ein definiertes axiales Spiel zwischen den miteinander verspannten Rohrleitungsabschnitten 51 und 52 gegeben ist, was auch eine leichte Knickung der beiden Rohrleitungsabschnitte zueinander ermöglicht. Durch die Führung der Schulter 9 in der Nut 7 ist ferner auch eine Verdrehung der Rohrleitungsabschnitte 51 und 52 zueinander ermöglicht. Innerhalb des Schalenkupplungsteiles 8 ist ein Dichtungsring 10 angeordnet, der die Rohrleitungskupplung 6 abdichtet. Der profilierte Dichtungsring 10 ist im Querschnitt annähernd pilzförmig ausgebildet und übergreift die Enden der beiden Rohrleitungsabschnitte 51 und 52 an ihrem Außenumfang. Hierbei wirken die Dichtungslippen 11, die hier flächenartig ausgebildet sind, dichtend mit dem Außenumfang der zugehörigen Rohrleitungsabschnitte 51 und 52 zusammen. Um eine optimale Dichtwirkung in jedem Betriebszustand zu gewährleisten, ist im Inneren des Dichtungsringes 10 eine umlaufende Druckkammer 12 angeordnet, die im Förderbetrieb durch den Spalt zwischen den Stirnseiten der Rohrleitungsabschnitte 51 und 52 hindurch druckbeaufschlagt ist. Infolge der Druckbeaufschlagung werden die Dichtflächen 11 an den Außenumfang der Rohrleitungsabschnitte 51 und 52 angepresst, wie durch die Pfeile dargestellt.

Typischerweise werden bei der Montage die Stirnseiten der beiden Rohrleitungsabschnitte 51 und 52 bündig aneinander gesetzt. Im Förderbetrieb werden die beiden Rohrleitungsabschnitte 51 und 52 infolge der bereits beschriebenen Kraftwirkung des strömenden Dickstoffes in Axialrichtung auseinander gedrückt, so dass ein Spalt zwischen den stirnseitigen Enden der Rohrleitungsabschnitte 51 und 52 entsteht, durch den hindurch die Druckkammer 12 im Inneren des Dichtungsringes 10 druckbeaufschlagt wird. Das Auseinanderdrücken der beiden Rohrleitungsabschnitte 51 und 52 verursacht jedoch Probleme an den Lager- und Führungsstellen des Rohrleitungssystems, insbesondere deswegen, weil sich das Spiel über alle Kupplungen aufaddiert und zwar je nach Mastlängen bis zu insgesamt 20 mm bis 30 mm. Von daher wird bei der Montage zwischen den beiden Stirnseiten der Rohrleitungsabschnitte 51 und 52 ein Distanzsteg 13 eingebracht, der typischerweise einteilig mit dem Dichtungsring 10 ausgebildet ist. Die Verbindung der beiden Rohrleitungsabschnitte 51 und 52 ist somit bereits bei der Montage auf das Maximalspiel ausgelegt, wodurch die Befestigung des Rohrleitungssystems am Knickmast problemlos vorgenommen werden kann, da durch die Distanzstege sozusagen die Addition der Spiele aller Kupplungen bereits berücksichtigt ist. Diese Distanzstege dichten allerdings nicht, sondern sitzen quasi mit geringem Spiel zwischen den Rohrleitungsabschnitten. Wie jedoch aus Fig. 2 ersichtlich, kann der Distanzsteg 13, wenn er sich unter dem Förderdruck verformt, den Spalt zwischen den Stirnseiten der miteinander verspannten Rohrleitungsabschnitte versperren und blockiert dann den Zugang zur Druckkammer 12. Im Förderbetrieb kann nämlich der Distanzsteg aufgrund des Förderdrucks verformt werden, wobei dieser sich mit seinen radial ausgerichteten Seitenflächen an die Stirnseiten der Rohrleitungsabschnitte 51 und 52 anlegt und den Spalt dichtend verschließt. Dies führt zwangsweise dazu, dass dann die radial gegenüber dem Außenumfang der Rohrleitungsabschnitte wirksamen eigentlichen Dichtflächen 11 nicht mehr wirksam sind, wodurch sich ein unkontrollierter Dichtzustand einstellt. Im Übrigen kommt es neben der Blockade des wulstartig unter dem Förderdruck verformten Distanzstegs 13 häufig zu einem Einreißen und schließlich zum Abreißen desselbigen.

Insbesondere auch unter Berücksichtigung der bereits beschriebenen Relativbewegung der Stirnseiten der Rohrleitungsabschnitte innerhalb der Rohrleitungskupplung kann es zu einer lokalen Beschädigung des Distanzstegs 13 kommen. Ebenso kann der Distanzsteg an einer Umfangsstelle lokal aus dem Spalt herausgedrückt werden. Begünstigt wird dies durch Vibrationen und Druckschwankungen im Fördervolumenstrom. In diesen Fällen kann Dickstoff durch den Spalt hindurch treten. In Ermangelung des notwendigen Anpressdrucks der Dichtflächen 11 an den Außenumfängen der betreffenden Rohrleitungsabschnitte wird der durch den Spalt hindurch tretende Dickstoff aber nicht wirkungsvoll zurückgehalten, was zur Undichtheit der Rohrleitungskupplung führt.

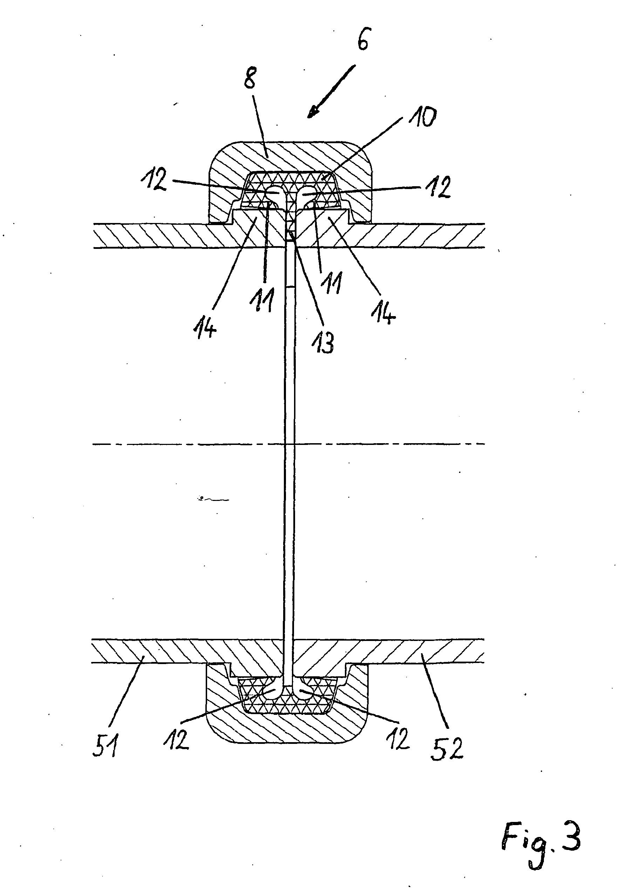

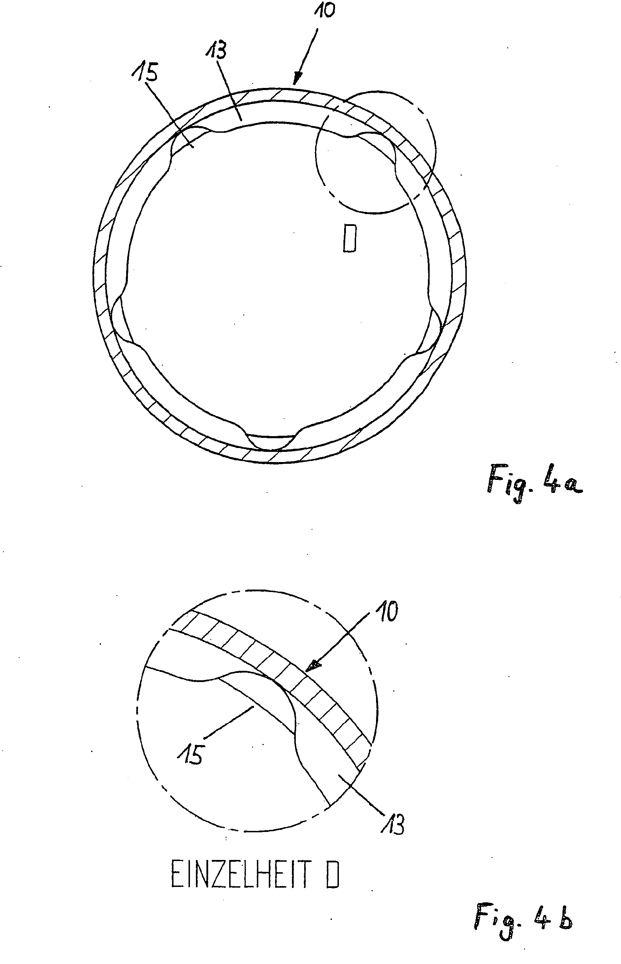

Fig. 3 zeigt eine Rohrleitungskupplung 6, bei der die umlaufende Druckkammer bzw. die umlaufenden Druckkammern 12 durch einen Verbindungskanal permanent wirksam mit dem Inneren des Rohrleitungssystem verbunden ist bzw. sind, also auch unter dem Förderdruck, wenn beispielsweise Beton pulsierend durch das Rohrleitungssystem gefördert wird. Üblicherweise findet die Betonförderung unter zwei wechselweise zueinander arbeitenden Hydraulikzylindern statt. In dem dargestellten Ausführungsbeispiel übergreift das Schalenkupplungsteil 8 je einen radialen Flansch 14 an den stirnseitigen Enden der Rohrleitungsabschnitte 51 und 52. Wahlweise könnte das Schalenkupplungsteil 8 auch in Nuten 7 analog Fig. 2 eingreifen. Innerhalb des Schalenkupplungsteiles 8 ist der Dichtungsring 10 angeordnet, der wiederum durch das Schalenkupplungsteil 8 lagefixiert ist. Zur Abdichtung wirken die Dichtungsflächen 11 des Dichtungsringes 10 mit den Außenumfangsflächen der Flansche 14 zusammen. Der Dichtungsring 10 umfasst ferner einen radial nach innen vorstehenden Distanzsteg 13 in Form einer Lippe, der die beiden Stirnseiten der Rohrleitungsabschnitte 51 und 52 definiert zueinander beabstandet. Der Distanzsteg 13 weist über seinen Umfang mindestens eine, bevorzugt aber mehrere Ausnehmungen 15 gemäß Fig. 4a auf. Wie im oberen Bildabschnitt der Fig. 3 dargestellt, greift der Distanzsteg 13 über seinem Umfang bis auf die Ausnehmungen in den Spalt zwischen den Rohrleitungsabschnitten. Im unteren Bildabschnitt, der einen Schnitt durch eine Ausnehmung 15 wiedergibt, erkennt man jedoch, dass das Innere des Rohrleitungssystems mit der Druckkammer 12 des Dichtungsringes 10 aufgrund der Ausnehmungen stets verbunden ist. Der Distanzsteg reicht infolge der Ausnehmung 15 an dieser Stelle nicht in den Spalt zwischen den Stirnflächen der Rohrleitungsabschnitte hinein, wodurch die durchgehend über den Umfang des Druckringes ausgebildete Druckkammer 12 mit Druck beaufschlagbar ist.

Idealerweise sind über den Umfang des Distanzstegs 13 gleichmäßig verteilt mehrere Ausnehmungen 15 angeordnet, wie in Fig. 4a dargestellt, beispielsweise fünf Ausnehmungen die mit einem Umfangswinkel von je 72° zueinander beabstandet sind. Diese Ausnehmungen 15 stellen eine kanalähnliche Verbindung zwischen dem Innenraum des Rohrleitungssystems und der Druckkammer 12 des Dichtungsringes 10 her, die permanent d.h. in jedem Betriebszustand der Förderanlage wirksam ist.

Wie sich aus der Detaildarstellung der Fig. 4b ergibt, sind die Ausnehmungen 15 annähernd halbkreisförmig ausgebildet, wobei die Halbkreisöffnung radial betrachtet innen liegend und der Halbkreisgrund radial betrachtet außen liegend angeordnet ist. Die Übergänge in die Ausnehmung 15 hinein bzw. aus der Ausnehmung 15 heraus sind tangentenstetig, d.h. knickfrei ausgebildet, wodurch Spannungsspitzen im Material an dieser Stelle wirkungsvoll verhindert werden, die möglicherweise zu einem Einreißen, d.h. zu einer Beschädigung führen könnten. Selbstverständlich sind auch andere Ausnehmungsformen denkbar. Auch die Kombination verschiedener Ausnehmungsformen innerhalb eines Dichtungsringes ist denkbar.

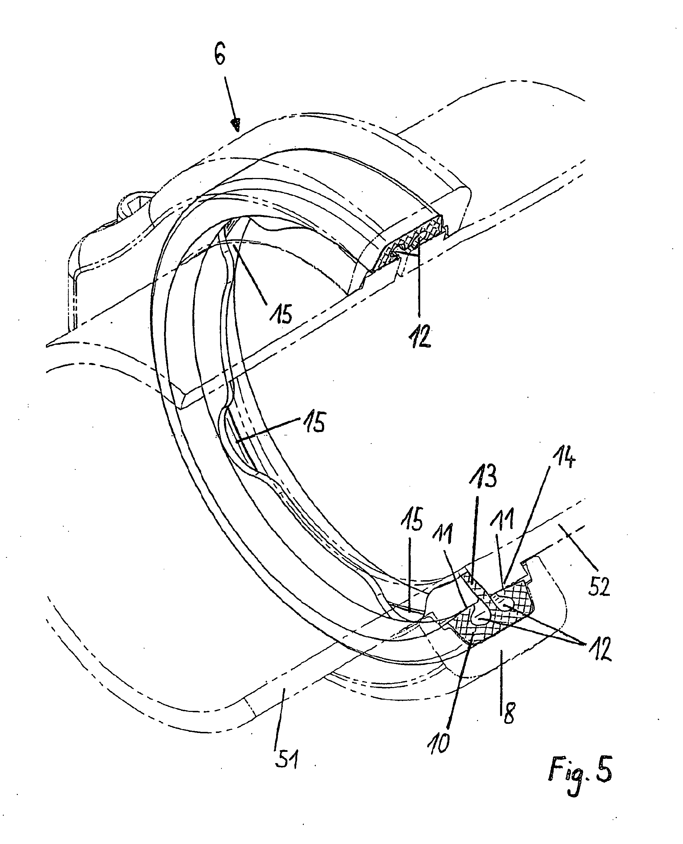

In Fig. 5 ist deutlich zu erkennen, wie ein solcher Dichtungsring 10 mit den beschriebenen Ausnehmungen 15 im verbauten Zustand mehrere Verbindungskanäle zwischen dem Inneren des Rohrleitungssystems und dem umlaufenden Druckraum 12 bereitstellt, so dass in jedem Betriebszustand die Dichtungslippen 11 an den Außenumfangsflächen des Flansches 14 angepresst werden können und damit die Rohrleitungskupplung 6 zuverlässig nach außen hin abgedichtet wird.

Der Dichtungsring 10 ist aus einem weichelastischem Material gebildet, vorzugsweise einem kautschukähnlichen Material, beispielsweise einem Gummiwerkstoff, einem Elastomerwerkstoff oder einem Siliconwerkstoff. Auch andere geeignete Werkstoffe sind denkbar.

Abweichend zu dem dargelegten Ausführungsbeispiel ist auch ein Dichtungsring 10 denkbar, der anders gestaltete Dichtflächen 11 aufweist, bspw. in Form mehrerer nebeneinander angeordneter Dichtungslippen. Ebenfalls können mehrere Druckkammern 12 im Dichtungsring 10 vorgesehen sein und/oder die umlaufende Dichtungskammer 12 kann in einzelne Druckkammerabschnitte unterteilt sein.

Die in den Figuren dargestellte spiegelsymmetrische Ausbildung des Dichtungsringes 10 ist ebenfalls aus technischer Sicht nicht erforderlich. Die Gestalt der Ausnehmungen 15 kann auch abweichend zu der in den Figuren dargestellten Form sein.

## Patentansprüche

1. Rohrleitungskupplung (6) zum Verbinden einzelner Rohrleitungsabschnitte (5, 51, 52) in einem Rohrleitungssystem (4) für die Förderung von unter Druck stehenden Medien, insbesondere Dickstoffen wie Beton, Mörtel und dgl., wobei die Rohrleitungsabschnitte (5, 51, 52) an ihren stirnseitigen Enden durch rohrschellenartige Kupplungsteile miteinander verspannt sind, und innerhalb eines Kupplungsteils (8) ein Dichtungsring (10) angeordnet ist, der wenigstens eine Druckkammer (12) und wenigstens zwei beabstandete Dichtungsflächen (11) aufweist, die unter dem Förderdruck des zu fördernden Mediums dichtend am Außenumfang der jeweiligen Rohrleitungsabschnitte (5, 51, 52) anliegen, wozu
unter Förderdruck wenigstens ein permanent wirksamer Verbindungskanal zwischen dem Inneren der Rohrleitungsabschnitte (5, 51, 52) und der Druckkammer (12) des Dichtungsringes (10) vorgesehen ist, und wobei der Dichtungsring (10) ferner einen umlaufenden, radial nach innen weisenden Distanzsteg (13) aufweist, der sich zwischen die stirnseitigen Enden der durch das Kupplungsteil miteinander verbundenen Rohrleitungsabschnitte (5, 51, 52) erstreckt,
**dadurch gekennzeichnet, dass**
im Distanzsteg (13) wenigstens eine sich radial nach außen erstreckende Ausnehmung (15) angeordnet ist, die einen Verbindungskanal zwischen dem Inneren der Rohrleitungsabschnitte (5, 51, 52) und der Druckkammer (12) des Dichtungsringes (10) ausbildet, derart, dass der Distanzsteg (13) im Bereich dieser Ausnehmung (15) nicht in den Spalt zwischen den stirnseitigen Enden der miteinander verbundenen Rohrleitungsabschnitte (5, 51, 52) hineinreicht.

2. Rohrleitungskupplung (6) nach Anspruch 1,
**dadurch gekennzeichnet, dass**
im Distanzsteg (13) des Dichtungsringes (10) fünf über dem Umfang verteilte Ausnehmungen (15) angeordnet sind, die Verbindungskanäle zwischen dem Inneren der Rohrleitungsabschnitte (5, 51, 52) und der Druckkammer (12) des Dichtungsringes (10) ausbilden.

3. Rohrleitungskupplung (6) nach Anspruch 1 oder 2,
**dadurch gekennzeichnet, dass**
die Ausnehmungen (15) im Distanzsteg (13) halbkreisförmig und durchgängig, insbesondere an den Übergangsstellen tangentenstetig ausgebildet sind.

4. Rohrleitungskupplung (6) nach Anspruch 3,
**dadurch gekennzeichnet, dass**
die Halbkreisöffnungen der halbkreisförmigen Ausnehmungen (15) radial betrachtet innen liegend und die Halbkreisgründe radial betrachtet außen liegend angeordnet sind.

5. Rohrleitungskupplung (6) nach einem der vorausgehenden Ansprüche,
**dadurch gekennzeichnet, dass**
die Ausnehmungen (15) eine radiale Tiefe von maximal 60 % der Gesamthöhe des Distanzstegs (13) aufweisen, bevorzugt eine maximale Tiefe von 80 % der Gesamthöhe des Distanzstegs (13).

6. Rohrleitungskupplung (6) nach einem der vorausgehenden Ansprüche,
**dadurch gekennzeichnet, dass**
der Dichtungsring (10) einteilig aus einem elastischen, vorzugsweise kautschukähnlichem Material gebildet ist.

7. Rohrleitungskupplung nach einem der vorausgehenden Ansprüche,
**dadurch gekennzeichnet, dass**
der Distanzsteg (13) in axialer Richtung des Dichtungsringes (10) mittig angeordnet ist.

8. Rohrleitungskupplung (6) nach Anspruch 1,
**dadurch gekennzeichnet, dass**
der Distanzsteg (13) über seinem Umfang eine unterschiedliche, variierende Stärke aufweist und/oder mit sich radial erstreckenden, vorzugsweise nutartigen Ausnehmungen versehen ist, wodurch wenigstens ein Verbindungskanal zwischen dem Inneren der Rohrleitungsabschnitte (5, 51, 52) und der Druckkammer (12) des Dichtungsringes (10) vorhanden ist.

9. Rohrleitungssystem (4) für die Förderung von unter Druck stehenden Medien, insbesondere Dickstoffen wie Beton, Mörtel und dgl., umfassend mehrere Rohrleitungsabschnitte, wobei die Rohrleitungsabschnitte (5, 51, 52) mittels Rohrleitungskupplungen (6) miteinander verbunden sind,
**dadurch gekennzeichnet, dass**
wenigstens zwei Rohleitungsabschnitte (5, 51, 52) mit einer Rohrleitungskupplung (6) gemäß einem der Ansprüche 1 bis 8 miteinander verbunden sind.

## Claims

1. Pipeline coupling (6) for joining individual pipeline sections (5, 51, 52) in a pipeline system (4) for delivering media under pressure, in particular thick matter such as concrete, mortar and the like, wherein the pipeline sections (5, 51, 52) are clamped to one another at their ends by band-clamp coupling-parts and a sealing ring (10) is arranged inside one coupling-part (8) that has at least one pressure chamber (12) and at least two spaced-apart sealing faces (11) which under the delivery pressure of the medium to be delivered make sealing contact with the outer circumference of the respective pipeline sections (5, 51, 52), for which purpose under delivery pressure at least one permanently active communicating passage is provided between the interior of the pipeline sections (5, 51, 52) and the pressure chamber (12) of the sealing ring (10), and
wherein the sealing ring (10) moreover has an all-round, radially inwards-pointing spacer web (13) which extends between the end faces of the pipeline sections (5, 51, 52) joined to one another by the coupling-part,
**characterized in that**
to form the communicating passage(s) between the interior of the pipeline sections (5, 51, 52) and the pressure chamber (12) of the sealing ring (10), at least one radially outwards-extending recess (15) is arranged in the spacer web (13) in such a way that the spacer web (13) does not reach into the gap between the end faces of the joined pipeline sections (5, 51, 52) in the region of the said recess (15).

2. Pipeline coupling (6) according to Claim 1,
**characterized in that**
five recesses (15) distributed around the circumference are arranged in the spacer web (13) of the sealing ring (10) to form communicating passages between the interior of the pipeline sections (5, 51, 52) and the pressure chamber (12) of the sealing ring (10).

3. Pipeline coupling (6) according to Claim 1 or Claim 2,
**characterized in that**
the form of the recesses (15) in the spacer web (13) is semicircular, and tangentially constant throughout, particularly at the transitions.

4. Pipeline coupling (6) according to Claim 3,
**characterized in that**
the semicircular recesses (15) are arranged with their semicircular openings on the inside (in radial terms) and their semicircular bottoms on the outside (in radial terms).

5. Pipeline coupling (6) according to any one of the preceding claims,
**characterized in that**
the recesses (15) have a radial depth of not more than [*sic*] 60% of the total height of the spacer web (13), preferably a maximum depth of 80% of the total height of the spacer web (13).

6. Pipeline coupling (6) according to any one of the preceding claims,
**characterized in that**
the sealing ring (10) is made in one piece from resilient, preferably rubber-like material.

7. Pipeline coupling according to any one of the preceding claims,
**characterized in that**
the spacer web (13) is arranged centrally in the axial direction of the sealing ring (10).

8. Pipeline coupling (6) according to Claim 1,
**characterized in that**
over its circumference, the spacer web (13) has a non-constant, varying thickness and/or is provided with radially extending, preferably groove-like recesses thereby forming at least one communicating passage between the interior of the pipeline sections (5, 51, 52) and the pressure chamber (12) of the sealing ring (10).

9. Pipeline system (4) for delivering media under pressure, in particular thick matter such as concrete, mortar and the like, comprising several pipework sections, wherein the pipework sections (5, 51, 52) are joined to one another by means of pipework couplings (6),
**characterized in that**
at least two pipework sections (5, 51, 52) are joined to one another with a pipework coupling (6) according to any one of Claims 1 to 8.

## Revendications

1. Accouplement pour conduits tubulaires (6) destiné à relier des segments de conduit tubulaire individuels (5, 51, 52) dans un système de conduits tubulaires (4) pour le refoulement de fluides sous pression, en particulier de liquides épais tels que le béton, le mortier et analogue, dans lequel les segments de conduit tubulaire (5, 51, 52) sont reliés sous contrainte les uns aux autres au niveau de leurs extrémités frontales au moyen d'éléments d'accouplement analogues à des colliers de fixation, et dans lequel une bague d'étanchéité (10) est disposée à l'intérieur d'un élément d'accouplement (8), laquelle bague présente au moins une chambre de pression (12) et au moins deux surfaces d'étanchéité (11) espacées l'une de l'autre, qui sont pressées de manière étanche, sous la pression de refoulement du fluide à refouler, contre la circonférence externe du segment de conduit tubulaire concerné (5, 51, 52), pour lequel
sous la pression de refoulement, au moins un canal de liaison en permanence fonctionnel est prévu entre l'intérieur des segments de conduit tubulaire (5, 51, 52) et la chambre de pression (12) de la bague d'étanchéité (10), et
dans lequel la bague d'étanchéité (10) présente en outre une nervure d'écartement (13) circonférentielle dirigée radialement vers l'intérieur, qui s'étend entre les extrémités frontales des segments de conduit tubulaire (5, 51, 52) reliés les uns aux autres au moyen de l'élément d'accouplement,
**caractérisé en ce que**
au moins un évidement (15) dirigé radialement vers l'intérieur qui forme un canal de liaison entre l'intérieur des segments de conduit tubulaire (5, 51, 52) et la chambre de pression (12) de la bague d'étanchéité (10) est disposé dans la nervure d'écartement (13), de sorte que, dans la zone de cet évidement (15), la nervure d'écartement (13) ne pénètre pas dans la fente entre les extrémités frontales des segments de conduit tubulaire (5, 51, 52) reliés les uns aux autres.

2. Accouplement pour conduits tubulaires (6) selon la revendication 1,
**caractérisé en ce que**
cinq évidements (15) répartis sur la circonférence sont prévus dans la nervure d'écartement (13) de la bague d'étanchéité (10), lesquels évidements forment des canaux de liaison entre l'intérieur des segments de conduit tubulaire (5, 51, 52) et la chambre de pression (12) de la bague d'étanchéité (10).

3. Accouplement pour conduits tubulaires (6) selon la revendication 1 ou 2,
**caractérisé en ce que**
les évidements (15) dans la nervure d'écartement (13) sont réalisés sous forme de demi-cercle et ininterrompue, en particulier tangentielle au niveau des jonctions.

4. Accouplement pour conduits tubulaires (6) selon la revendication 3,
**caractérisé en ce que**
vu radialement, les ouvertures de demi-cercle des évidements en forme de demi-cercle (15) sont disposées à l'intérieur et, vu radialement, les bases de demi-cercle sont disposées à l'extérieur.

5. Accouplement pour conduits tubulaires (6) selon l'une quelconque des revendications précédentes,
**caractérisé en ce que**
les évidements (15) présentent une profondeur radiale correspondant au maximum à 60% de la hauteur totale de la nervure d'écartement (13), de préférence une profondeur maximale correspondant à 80% de la hauteur totale de la nervure d'écartement (13).

6. Accouplement pour conduits tubulaires (6) selon l'une quelconque des revendications précédentes,
**caractérisé en ce que**
la bague d'étanchéité (10) est formée d'une seule pièce à partir d'un matériau élastique, de préférence analogue à du caoutchouc.

7. Accouplement pour conduits tubulaires selon l'une quelconque des revendications précédentes,
**caractérisé en ce que**
la nervure d'écartement (13) est disposée au centre dans le sens axial de la bague d'étanchéité (10).

8. Accouplement pour conduits tubulaires (6) selon la revendication 1,
**caractérisé en ce que**
la nervure d'écartement (13) présente, sur sa circonférence, une épaisseur irrégulière variable et/ou est pourvue d'évidements, de préférence en forme de rainures, s'étendant radialement, si bien qu'au moins un canal de liaison est présent entre l'intérieur des segments de conduit tubulaire (5, 51, 52) et la chambre de pression (12) de la bague d'étanchéité (10).

9. Système de conduits tubulaires (4) pour le refoulement de fluides sous pression, en particulier de liquides épais tels que le béton, le mortier et analogues, comprenant plusieurs segments de conduit tubulaire, dans lequel les segments de conduit tubulaire (5, 51, 52) sont reliés les uns aux autres au moyen d'accouplements pour conduits tubulaires (6),
**caractérisé en ce que**
au moins deux segments de conduit tubulaire (5, 51, 52) sont reliés les uns aux autres au moyen d'un accouplement pour conduits tubulaires (6) selon l'une quelconque des revendications 1 à 8.
